# EUROPEAN PATENT APPLICATION

(11) **EP 4 428 411 A1**
(43) Date of publication of application: **11.09.2024**
(21) Application number: 24161434.6
(22) Date of filing: 05.03.2024
(51) Int. Cl.: F16K 11/044, F16K 27/02, F16K 3/24

(54) **IMPROVED THREE-WAY VALVE AND PROCESS FOR MAKING IT**

(30) Priority: 10.03.2023 IT 202300004512
(71) Applicant: G20 Engineering S.r.l., 29013 Carpaneto Piacentino (PC) (IT)
(72) Inventor: RAPACCIOLI, Marco, 29013 Carpaneto Piacentino (PC) (IT)
(74) Representative: Provvisionato, Paolo

(57) **Abstract**

A three-way valve includes a casing having a first port (14), a second port (16) and a third port (16) and is conformed to house within a shutter (20) comprising a movable element (22) configured to cooperate with the valve ports in the casing to connect the first port with the second port and/or the third port, wherein the casing comprises two casing portions (30, 32) connected to each other.

## Description

### Field of the invention

The present invention relates to a three-way valve and to a process for making such a valve.

The invention has been developed with particular, though not limited, attention to a three-way valve for a boiler or an air/water heat pump. The valve may be either a diverter valve or a mixing valve.

### Technological background

For decades now, three-way valves have been used in domestic heating and/or cooling systems, e.g. to divert the flow of hot water between the heating circuit and the DHW circuit. More recently, the use of air/water heat pumps, or chillers, which also require three-way valves, is becoming more widespread.

Typically, a three-way valve has an inlet port, usually designated AB, from which, for example, hot water from a primary heat exchanger enters, and two outlet ports, usually designated A and B, which connect to the DHW circuit and the heating circuit. An actuator operates a shutter which diverts water to one or the other outlet, as required. It is understood that, depending on the specific application, three-way valves are suitable for either diverting water from AB to A or B, in which case they are referred to as diverter three-way valves, or from A and/or B to AB, in which case they are referred to as mixing three-way valves.

Typically, three-way valves comprise an outer structure that includes the A, B and AB ports, and a cartridge shutter that fits inside. The cartridge shutter comprises a moving element which, when moved by an actuator, causes either port A or B to open alternately, or both ports to open partially. The shutter is a relatively delicate element and can be replaced, if necessary, without changing the entire valve.

One problem with devices of the known type is that their geometry and thus their construction is complex. For example, it is known to make the valve from cast bronze with a mould in which sand cores can be set up to create the fluid passages. Alternatively, the valve can be forged with subsequent machining to obtain the desired geometry. In this case, brass is usually preferred. More recently, polymer valves have begun to be produced, obtained by casting in a moulds and subsequently machined to remove excess material and obtain the necessary undercuts. All of these procedures are complex and require numerous subsequent operations.

### Summary of the invention

One purpose of the invention is to solve the problems of the known technique and obtain a valve that is easier to manufacture. Another purpose is to provide a more compact valve. A further purpose is to provide an inexpensive and simple device. Another purpose is to provide a more flexible valve.

According to a first aspect, a three-way valve is described, comprising a casing with a first port, a second port and a third port. The three-way valve may be a diverter valve, with inlet from the first port and outlet from the second or third port, or a mixing valve, with inlet from the second and third ports and outlet from the first port. The casing may be shaped to accommodate a shutter, preferably a cartridge shutter. The shutter may comprise a movable element configured to cooperate with the valve ports in the casing to connect the first port with the second and/or the third port. By connect we mean to connect fluidically, i.e. to create a passage for a fluid between two ports. When the valve is to be used in diverter mode, the shutter can connect the first port alternately with the second or the third port. When instead the valve is in mixing mode, the shutter can connect the first port with the second and the third port. In this case, the flow rate from the second and the third port can be varied by changing the position of the shutter. The casing may comprise two casing portions connected to each other.

The division into two casing portions allows for producing by moulding, preferably of a polymer, without the need for subsequent procedures, making production significantly simpler and cheaper. The two casing portions can be mechanically connected together, preferably reversibly, e.g. with bolts, screws, clips or more generally mechanical means of connection. By casing portions is meant here and hereafter two portions complementary to each other, not necessarily identical in shape and/or size, which, when joined, define a casing.

According to another aspect, a three-way valve is described, comprising a casing having a first port, a second port and a third port, wherein the second port defines an axis of the second port and the third port defines an axis of the third port. The casing comprises two casing portions which can be coupled together in two different configurations. In a first configuration the axis of the second door and the axis of the third door are parallel to each other, preferably coincident. In a second configuration the axis of the second port and the axis of the third port are perpendicular to each other.

According to another aspect, a three-way valve comprising two casing portions and a separating septum, distinct from the casing portions and interposed between them, is described.

According to another aspect, a process for making a three-way valve is described. The valve may comprise a casing having a first port, a second port and a third port. The process may comprise the step of making, preferably by moulding, a pair of casing portions. The process may comprise the step of assembling two casing portions together to obtain the casing. The casing can be suitable for housing a shutter inside it, preferably a cartridge one. The process may comprise the step of selecting one of two possible orientations of the two casing portions. In a first orientation an axis of the second port and an axis of the third port are parallel to each other, preferably coincident. In a second orientation the axis of the second port and the axis of the third port are perpendicular to each other.

### Brief description of the drawings

Further features and advantages will become apparent from the following detailed description of a preferred embodiment of the invention, with reference to the appended drawings, provided purely by way of non-limiting example, wherein:
- figure 1 is an exploded view of the valve components,
   - figure 2 is a perspective view of the assembled valve in a first configuration,
   - figure 3 is a front view of the valve of figure 2,
      - figure 4 is an exploded front view of the valve of figure 2,
      - figure 5 is a plan view from above of the valve of figure 2,
   - figure 6 is a section along the X-X plane visible in figure 5,
      - figure 7 is an exploded view of the same valve components of figure 1, orientated to be assembled according to a second configuration,
      - figure 8 shows a perspective view of the valve assembled in the second configuration,
   - figure 9 shows a front view of the valve of figure 8,
   - figure 10 shows an exploded front view of the valve of figure 8,
   - figure 11 is a plan view from above of the figure 8 valve, and
- figure 12 is a section along the Y-Y plane visible in figure 11.

### Detailed description

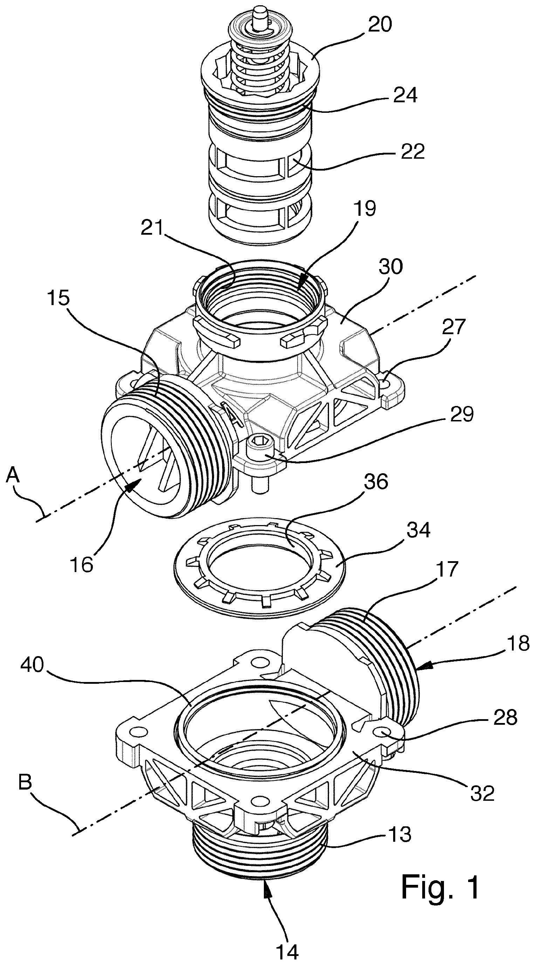

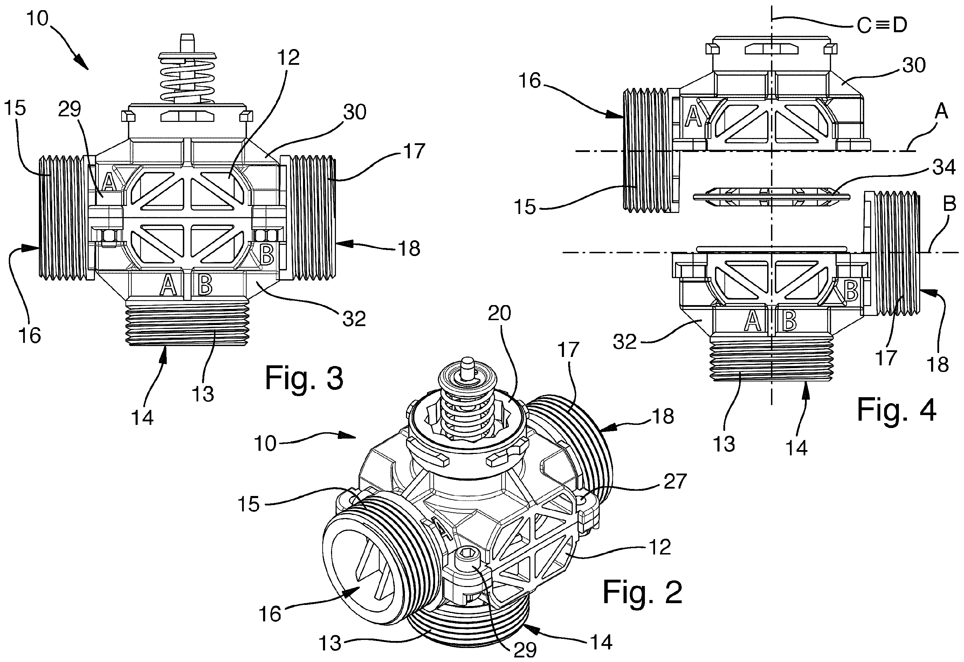

Referring now to Figures 1 to 6, a three-way valve 10 comprises a casing 12 having a total of three ports, as known for a three-way valve: a first port 14, conventionally referred to as AB in the field, a second port 16 referred to as A, and a third port 18, normally referred to as B. The three ports 14, 16, 18 are provided with respective threads 13, 15, 17, to enable them to be attached as known in the field.

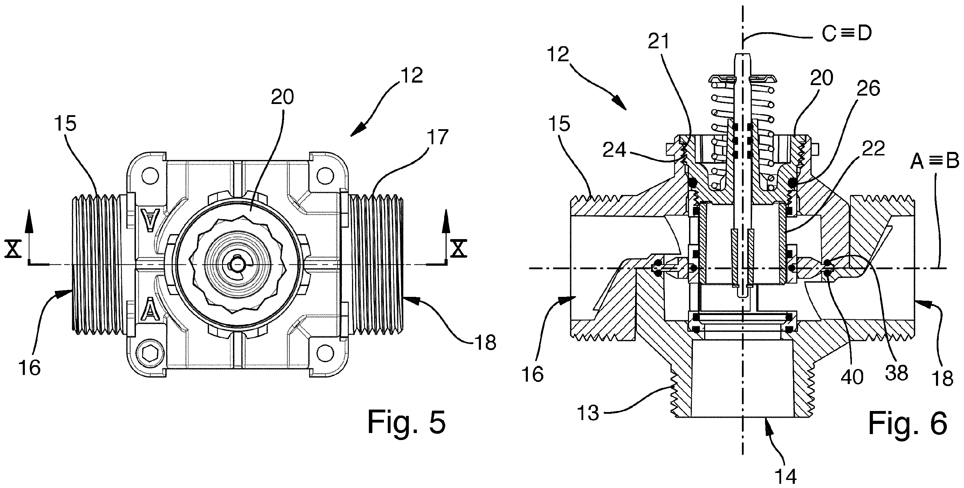

The casing 12 includes a seat 19 for housing within it a cartridge shutter 20 of a known type. The cartridge shutter includes within it a movable element 22, visible in the section of Figure 6. The movable element 22 is configured to cooperate with the valve ports in the casing to connect the first port 14 with the second port 16 and/or with the third port 18. In particular, the movable element 22 can move between a first position, in which it shuts the second port 16 and connects the first port 14 with the third port 18, and a second position in which it shuts the third port 18 and connects the first port 14 with the second port 16. In the first position, shown in Figure 6, the movable element 22 is fully raised. In the second position, not shown in the figures, the movable element 22 is lowered. As known in the field, the movable element 22 can be positioned in any intermediate position between the first position and the second position, so as to put the first port 14 in communication with both the second port 16 and the third port 18. In fact, in case the valve is used as a mixing valve, the intermediate positions allow fluid coming from the second port as well as fluid coming from the third port to be introduced into the first port, with variable proportions as desired, by moving the movable element 22.

The longitudinal axis C of the shutter, along which the movable element 22 of the cartridge shutter 20 is able to translate, is preferably coincident with an axis D of the first port 14.

As is clearly visible in the exploded figures, the casing 12 comprises two casing portions 30, 32 connected to each other. For convenience, the two casing portions will hereinafter be referred to as half-shells, although it is to be understood that they do not necessarily divide the casing into two halves. The first half-shell 30 comprises the second port 16 and the second half-shell 32 comprises the third port 18. The second half-shell further comprises the first door 14. The first half-shell 30 further comprises the threaded inlet 21 of the housing 19 for housing a cartridge shutter 20. The first and second half-shells are also provided with respective holes 27, 28, aligned with each other, to accommodate bolts 29 for securing the half-shells 30, 32 together. It is understood that other connection systems are acceptable, preferably mechanical and even more preferably reversible.

In the illustrated specific configuration, the casing 12 further comprises a separating septum 34, separate from the half-shells and interposed between them. The separating septum 34 is a ring with an inner hole 36. The separating septum 34 fluidically separates, when the valve is assembled, the second port 16 from the third port 18, with the sole exception of the hole 36, dimensioned for the introduction, in a sealed manner, of the cartridge shutter 20. The presence of the separating septum, which separates the second and third ports and which is distinct from the components of the casing, ensures that the valve can be manufactured by moulding: in fact, it eliminates the undercuts normally present in the components of a known three-way valve, thus eliminating the need for machining or in any case for more complex procedures.

Gaskets 38, 40, visible in Figure 6, are provided between the separating septum 34 and the two half-shells 30, 32, to guarantee the seal between the various components.

As mentioned, the cartridge shutter 20 is of a known type, already available on the market for a conventional three-way valve and can be inserted into the seat 19 provided in the casing 12. Preferably, the seat 19 includes a threaded inlet 21, which is capable of co-operating with a thread 24 of the cartridge shutter 20, to enable the shutter to be inserted into the seat 19 and permanently fixed therein. Furthermore, as it is known in the field, the cartridge shutter 20 includes a plurality of gaskets 26 to ensure sealing between the shutter and the casing 12.

The half-shells are shaped to be produced by moulding. That is, they do not comprise undercut portions that make moulding impossible. The half-shells are preferably made of a polymer. The separating septum, where provided, is also made by moulding, preferably of a polymer.

A process for making a three-way valve casing thus, comprises the step of making, preferably by moulding, a pair of half-shells 30, 32. Due to the conformation of the two half-shells, the process does not require subsequent machining by removal of material. The two half-shells can then be assembled together, preferably with the interposition of a separating septum, to obtain a casing for a three-way valve. A cartridge shutter can then be inserted into the resulting casing in order to make a three-way valve.

As can be seen in Figures 1 to 6, the two half-shells can be coupled so that an axis A of the second port 16 and an axis B of the third port 18 are coincident with each other. In other words, the second port 16 and the third port 18 are oriented 180° to each other. Both ports 16, 18 are oriented at 90° with respect to the first door 14.

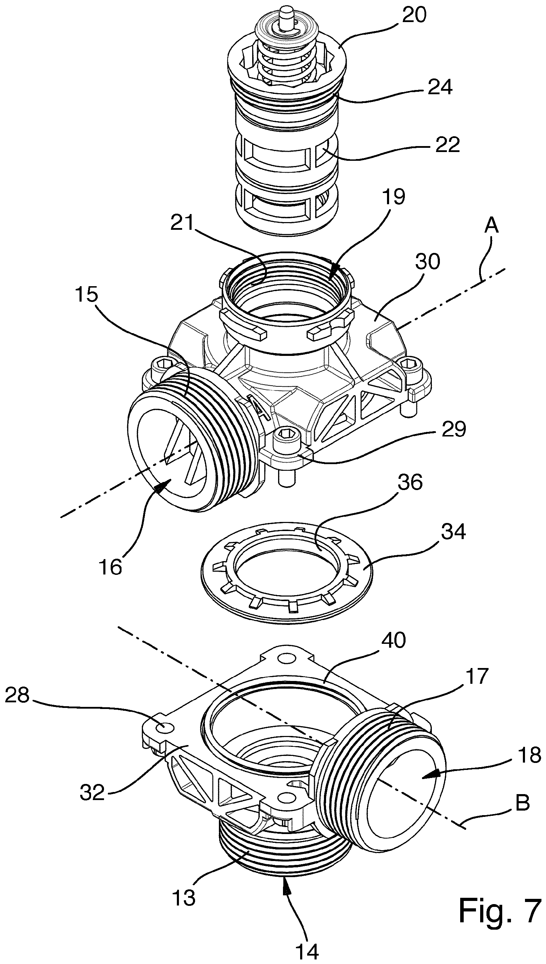

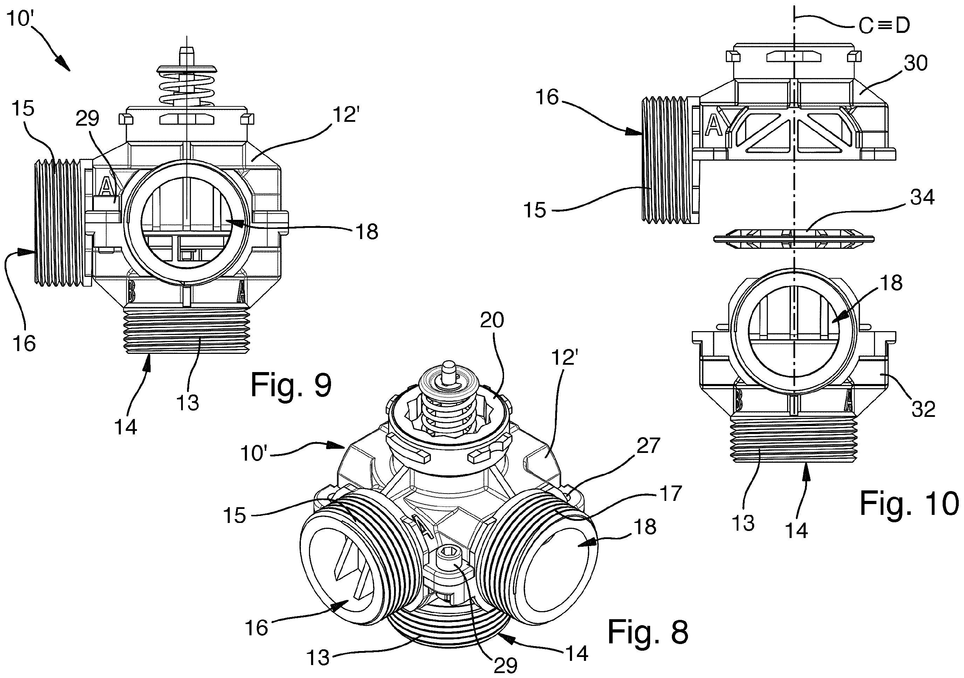

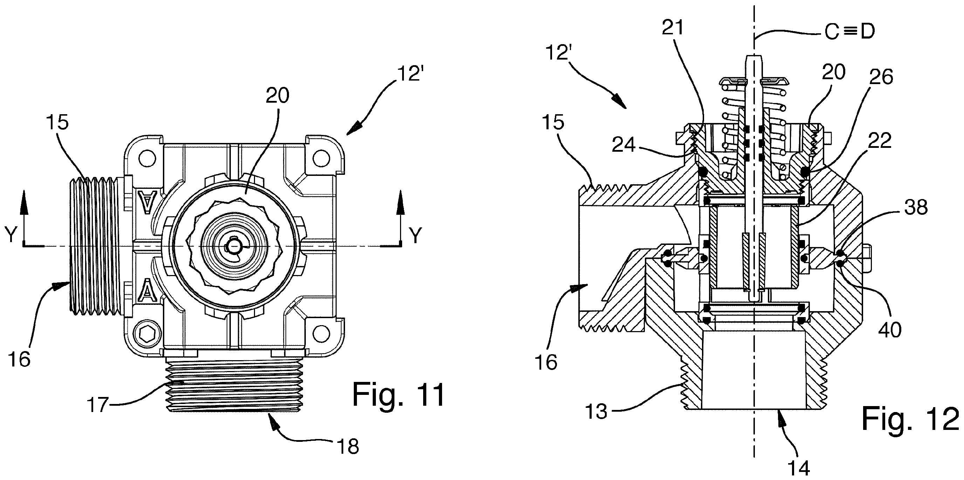

Referring now to Figures 7 to 12, the same components described above can be mounted in a second configuration to form a valve 10', with casing 12'. In the drawings, equal numbers correspond to equal elements. In the second configuration, the half-shells 30 and 32 are arranged so that the axis A of the second port 16 and the axis B of the third port 18 are perpendicular to each other. Both ports 16, 18 remain oriented at 90° with respect to the first port 14. Compared to the first configuration, one of the two half-shells is rotated 90° around the axis D of the first port 14.

This second, more compact, configuration is useful in cases where the available space is limited. Thanks to the valve's modularity, it is still possible to change the configuration when the valve is installed, depending on the specific needs of the plant. In the event of malfunctions, it is also possible to dismantle the valve to clean it of any sediment or fouling.

Naturally, the principle of the invention remaining unchanged, the forms of implementation and the details of realisation may vary widely with respect to what is described and illustrated, without departing from the scope of the invention.

## Claims

1. A three-way valve comprising a casing (12, 12') provided with a first port (14), a second port (16) and a third port (18) and conformed to house inside it a shutter (20) comprising a movable element (22) configured to cooperate with the valve ports in the casing to connect the first port with the second and/or third port,
wherein the casing comprises two portions of the casing (30, 32) connected to each other.

2. Three-way valve according to claim 1 wherein the two casing portions are mechanically connected to each other, preferably reversibly.

3. Three-way valve according to claim 1 or 2 wherein one of the two casing portions comprises the second port (16) and the other casing portion comprises the third port (18).

4. Three-way valve according to any of the preceding claims wherein the casing portions are made by moulding, preferably of a polymer.

5. Three-way valve according to any of the preceding claims wherein the second port (16) defines an axis (A) of the second port and the third port (18) defines an axis (B) of the third port and wherein the casing portions (30, 32) can be coupled in two different configurations, a first configuration in which the axis (A) of the second port and the axis (B) of the third port are parallel to each other and a second configuration in which the axis (A) of the second port and the axis (B) of the third port are perpendicular to each other.

6. Three-way valve according to any of the preceding claims wherein the casing further comprises a separating septum (34), distinct from the casing portions (30, 32) and interposed therebetween.

7. Three-way valve according to claim 6, wherein the separating septum (34) has a hole (36), sized for the sealed introduction of the shutter (20), and wherein the separating septum (34) fluidically separates, when the valve is assembled, the second port (16) from the third port (18).

8. A three-way valve according to any of the preceding claims, wherein the valve is a diverter valve.

9. Three-way valve according to any of claims 1 to 7, wherein the valve is a mixing valve.

10. Process for making a three-way valve comprising a casing (12) having a first port (14), a second port (16) and a third port (18), the process comprising the steps of:
- creating, preferably by moulding, a pair of casing portions (30, 32),
- assembling the two casing portions together to obtain the casing, suitable for housing a shutter (20) inside it.

11. Process according to the preceding claim further comprising the step of making, preferably by moulding, a separating septum (34), distinct from the casing portions (30, 32) and assembling it interposed therebetween.

12. Process according to the preceding claim wherein the separating septum (34) has a hole (36), dimensioned for the sealed introduction of the shutter (20), and wherein the separating septum (34) fluidically separates, with the valve assembled, the second port (16) from the third port (18).

13. Process according to any one of claims 10 to 12 further comprising the step of selecting one of two possible orientations of the two casing portions, a first orientation in which an axis (A) of the second port (16) and an axis (B) of the third port (18) are parallel to each other and a second orientation in which the axis (A) of the second port (16) and the axis (B) of the third port (18) are perpendicular to each other.
